# EUROPÄISCHE PATENTSCHRIFT

(11) **EP 1 386 778 B1**
(45) Veröffentlichungstag und Bekanntmachung des Hinweises auf die Patenterteilung: **24.10.2007**
(21) Anmeldenummer: 03017261.3
(22) Anmeldetag: 30.07.2003
(51) Int. Cl.: B60N 2/46, B60N 2/44

(54) **Drehbeweglicher Körper mit Entrastelement**
Rotatable body with unlocking element
Corps rotatif avec élément de déverrouillage

(30) Priorität: 30.07.2002 DE 10234715
(43) Veröffentlichungstag der Anmeldung: 04.02.2004
(73) Patentinhaber: Seeber AG & Co. KG, 68165 Mannheim (DE)
(72) Erfinder: Maierholzner, Thomas, 84137 Vilsbiburg (DE)
(74) Vertreter: Trossin, Hans-Jürgen

(56) Entgegenhaltungen:
- DE-A1- 10 059 842
- DE-A1- 19 957 523
- GB-A- 2 340 389
- US-A- 5 979 987

## Beschreibung

Die Erfindung bezieht sich auf einen drehbeweglicher Körper, insbesondere Ablage, Tisch oder Armlehne eines Kraftfahrzeugs oder eines Schienenfahrzeugs, der einen Grundträger umfasst und der über mindestens einen in einem Scharnier drehbar gelagerten Scharnierbügel um einen vorgegebenen maximalen Drehbereich drehbar und gegen einen Anschlag anstellbar ist.
Ein derartiger drehbeweglicher Körper ist aus der DE 199 57 523 C2, die alle Merkmale des Oberbegriffs des unabhängigen Anspruchs 1 aufweist, bekannt. Der Körper ist gegenüber einem ortsfest angebrachten Teil verschwenkbar und lässt sich in verschiedenen Gebrauchsstellungen durch Anschläge arretieren, zu denen eine Horizontalstellung des Körpers als auch eine vertikale Stellung gehören. Insbesondere kann der Anschlag auch ein Endanschlag sein. Aufgrund der Länge einer Armlehne besteht ein langer Hebel gegenüber dem Scharnier, in dem der Körper drehbar gelagert ist, so dass erhebliche Abstützkräfte auf den Körper wirken, wenn der Körper gegen einen Endanschlag geschwenkt wird. Zur besseren Aufnahme der Abstützkräfte sind Eingriffprofile vorgesehen.
Es ist die Aufgabe der Erfindung, eine Zerstörung oder Beschädigung des Körpers bei Einnahme einer Anschlagstellung zu verhindern. Erfindungsgemäß wird diese Aufgabe dadurch gelöst, dass der Scharnierbügel über ein Entrastelement in dem Grundträger gelagert ist, das bei Überschreiten einer Grenzkraft in Zugrichtung, d. h. in der von der Horizontalstellung nach oben gewandten Drehrichtung, unter Freigabe des Scharnierbügels von diesem lösbar ist.
Der Erfindung schafft somit in allen Fällen einer Missbrauchbelastung und bei Fehlbetätigung des Körpers, insbesondere beim Überreißen aus einer Endanschlagstellung Abhilfe gegen eine Zerstörung des Körpers. Bei Überschreiten einer vorgegebenen Überreißkraft löst sich der Scharnierbügel aus dem Körper und lässt sich reversibel wieder in diesen einbringen.
Eine leichte Trennung zwischen dem Körper und dem Scharnierbügel wird erreicht, wenn das Entrastelement gegenüber dem Scharnierbügel eine Trennschräge aufweist. Wenn eine vorgesehene Überrreißkraft überschritten wird, wird eine Hinterhakung zwischen dem Entrastelement und dem Scharnierbügel gelöst, so dass dieser über die Trennschräge aus dem Scharnierbügel herausgleitet.
Vorteilhafte Weiterbildungen der Erfindung ergeben sich aus den Unteransprüchen und aus der Beschreibung
Als geeignet erweist sich ein Körper, bei dem das Entrastelement in einer Führung in Längsrichtung bezüglich des Scharnierbügels und des Scharniers beweglich gelagert ist. Dadurch kann es auf einfache Weise bei einem plötzlichen Ansteigen der auf den Körper einwirkenden Belastung ausweichen und den Scharnierbügel freigeben. Insbesondere eine drehbare Lagerung spart Bauraum ein.
Mit Vorteil ist das Entrastelement bezüglich eines Anschlages in dem Körper elastisch gelagert. Dadurch wird gewährleistet, dass das Entrastelement schnell nachgibt. Hierzu dient es insbesondere auch, wenn das Entrastelement über eine Druckfeder bezüglich des Anschlages gelagert ist.
Eine weitere geeignete Maßnahme bei der Lagerung des Entrastelements besteht darin, dass das Entrastelement selbst aus einem elastischen Material, insbesondere einem elastischen Kunststoff, besteht.
Eine leichte Trennung zwischen dem Entrastelement und dem Scharnierbügel wird durch eine Trennschräge erreicht, die das Entrastelement gegenüber dem Scharnierbügel aufweist.
In einer vorteilhaften Weiterbildung der Erfindung hat das Entrastelement einen in eine Ausnehmung des Scharnierbügels eingreifenden Vorsprung, der einem Unterteil des Grundträgers zugewandt ist.
Zum einfachen Abtrennen des Scharnierbügels trägt es bei, wenn der Scharnierbügel in dem Unterteil des Körpers derart gelagert ist, dass der Scharnierbügel eine Öffnung des Unterteils durchgreift und mit seiner Oberseite an eine Wandung des Körpers angrenzt.
In einer vorteilhaft kompakten und mit wenigen Bauteilen kostengünstig herstellbaren Ausführungsform durchgreift der Scharnierbügel eine Öffnung des Unterteils und grenzt mit seiner Oberseite an eine Wandung eines Oberteils des Grundkörpers an.
Die Erfindung lässt sich insbesondere für verschiedene Formen von Armlehnen, Tische und Ablagen einsetzen, insbesondere auch im Bereich einer Mittelkonsole eines Personenkraftfahrzeugs. Ebenso lässt sich die Erfindung auch bei Schienenfahrzeugen verwenden, etwa für klappbare Tische.
Nachstehend wird die Erfindung in Ausführungsbeispielen anhand der Zeichnungen näher erläutert. Diese zeigen:
- Fig. 1: eine waagrechte Schnittansicht von oben durch einen fondseitigen Ausschnitt einer Mittelkonsole eines Personenkraftfahrzeugs mit einer Scharnierwelle und zwei Scharnieren einer Armlehne zur Verbindung der Armlehne mit einem Trägerkörper,
- Fig. 2: eine senkrechte Schnittansicht durch den fondseitigen Ausschnitt der Mittelkonsole gemäß Fig. 1 im Drehlagerpunkt einschließlich der Armauflage,
- Fig. 3: eine perspektivische Ansicht der Mittelkonsole mit dem Trägerkörper und einem Unterteil eines Grundkörpers der Armlehne von oben,
- Fig. 4: zwei Scharnierbügel jeweils in perspektivischer Ansicht,
- Fig. 5: eine perspektivische Ansicht der Armauflage und des Oberteils des Grundkörpers von unten,
- Fig. 6: eine perspektivische Ansicht der Armauflage und des gesamten Grundkörpers und
- Fig. 7: einen senkrechten Längsschnitt durch die Armlehne und den oberen Teil des Trägerkörpers.

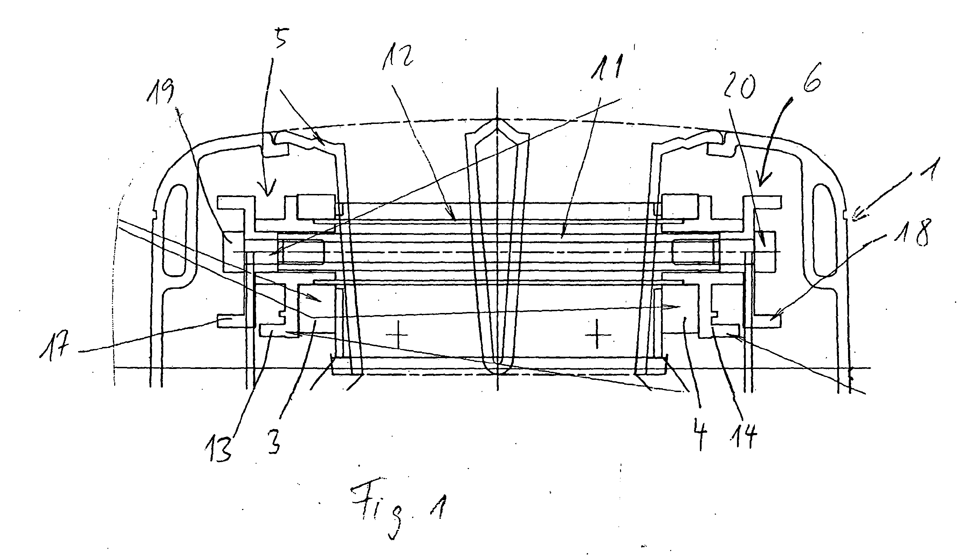

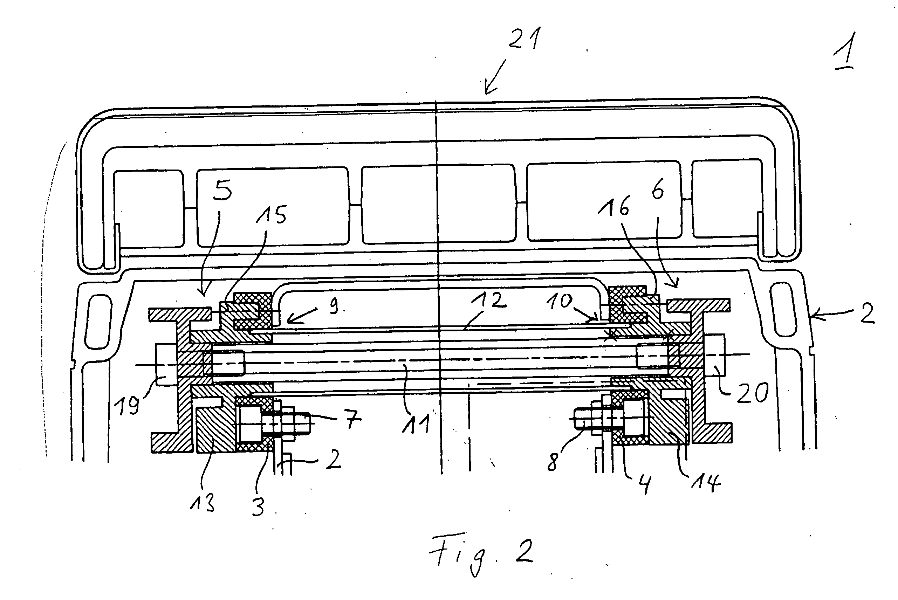

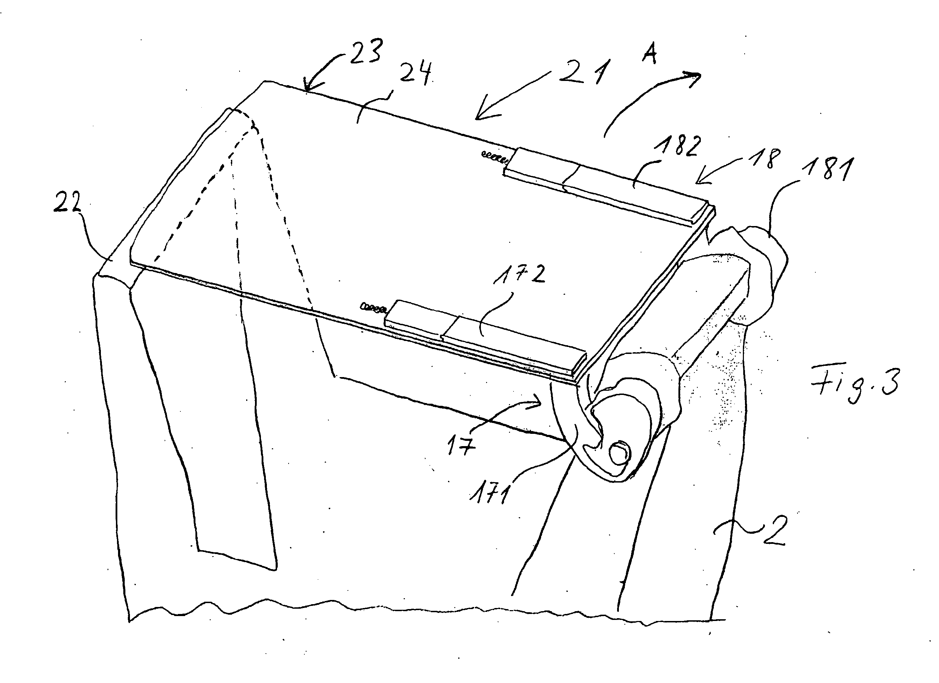

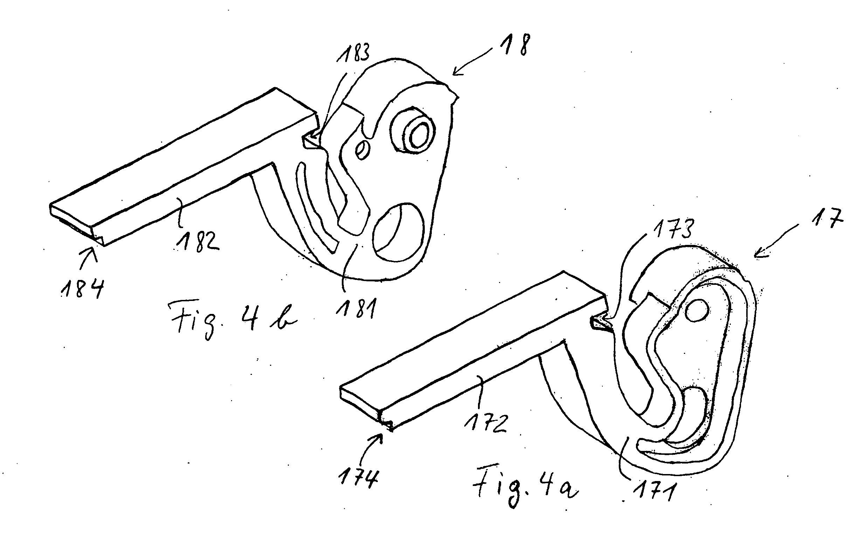

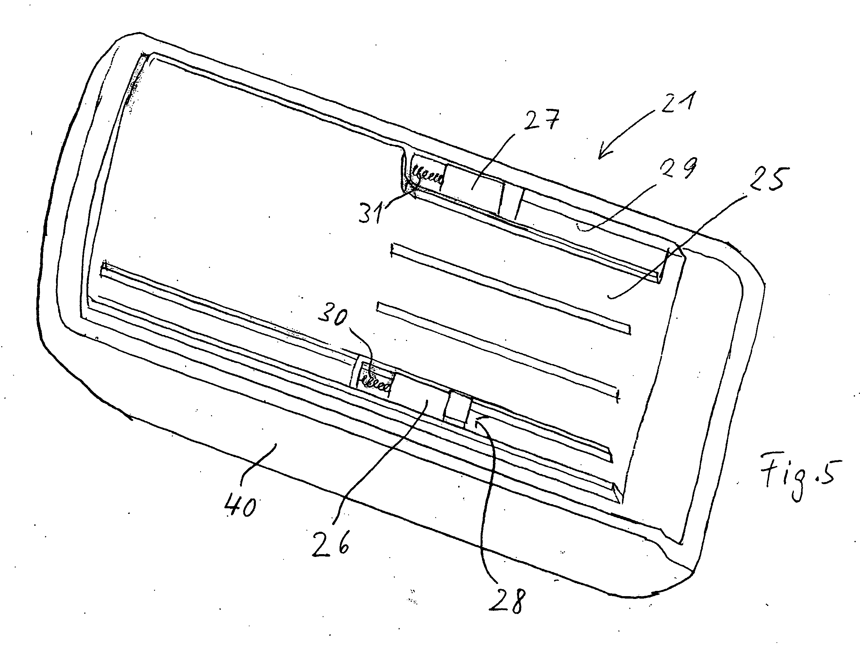

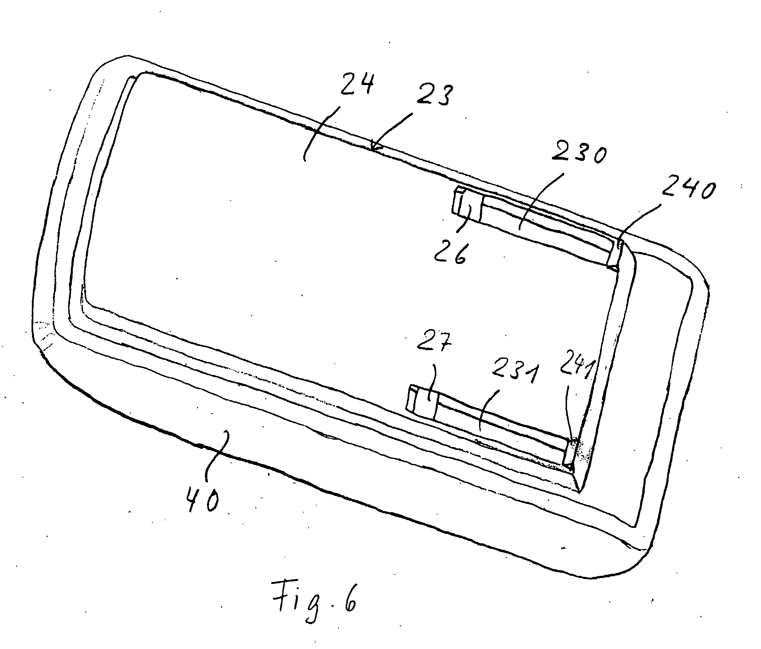

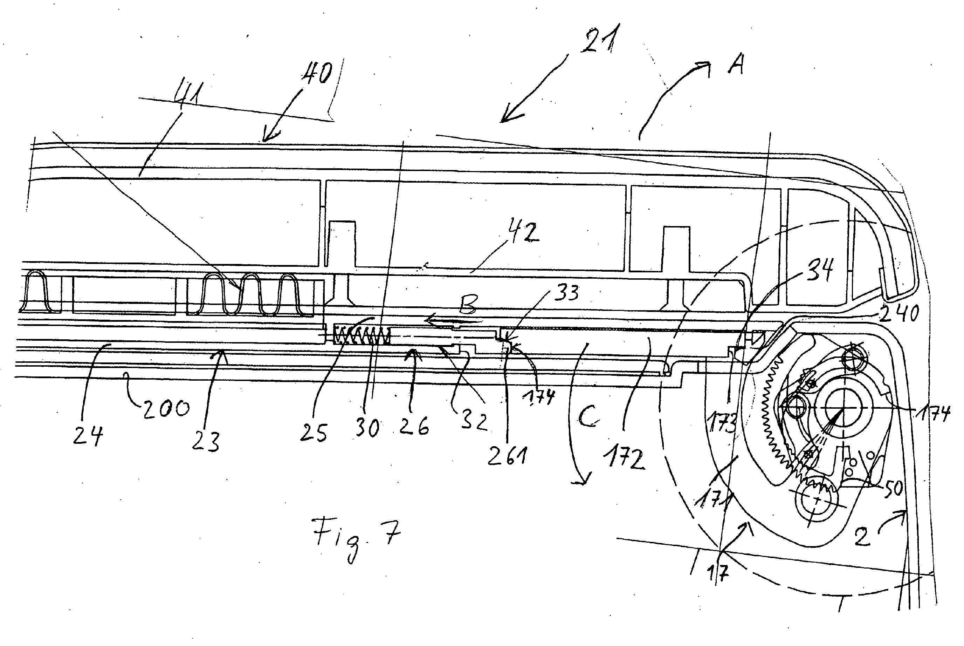

Ein Personenkraftwagen weist eine Mittelkonsole 1 (Fig. 1, 2) auf, die über einen Trägerkörper 2 Elemente 3 und 4 für Scharniere 5 bzw. 6 einschließlich zwei Scharnierbügeln 17, 18 aufnimmt, die jeweils über Schrauben 7 bzw. 8 mit dem Trägerkörper 2 verbunden sind.
Durch Öffnungen 9, 10 in der Wandung des Trägerkörpers 2 ist eine Scharnierwelle 11 hindurchgesteckt, die von einer Scharnierhülse 12 umgeben ist.

Auf die Elemente 3, 4 sind Scharnieraufnahmen 13, 14 aufgesteckt. Zum Aufstecken dienen jeweils mehrere fest mit den Scharnieraufnahmen 13, 14 verbundene Elemente 15, 16.
Die Scharnierbügel 17, 18 (Fig. 3, 4) setzen sich jeweils zusammen aus einem ersten gekröpften Teil 171 bzw. 181, über das sie mittels Schrauben 19, 20 mit der Scharnierwelle 11 drehfest verbunden sind, und einem zweiten gestreckten Teil 172 bzw. 182, über den sie jeweils gemeinsam eine Armlehne 21 tragen. Die Scharnierbügel 17, 18 sind ebenso wie Scharnieraufnahmen 13, 14 vorzugsweise Aluminium-Druckgussteile, während die Scharnierwelle 11 und die Scharnierhülse 12 bevorzugt aus Stahl bestehen. Die Scharnierbügel 17, 18 sind jeweils mit einem Anschlag 174 (Fig. 7) gegen einen Endanschlag 50 in den Scharnieren 5 bzw. 6 drehbar.
Wenn auf die Armlehne 21 eine Last ausgeübt wird, wird diese über die Scharnierbügel 17, 18, die Scharnieraufnahmen 13, 14 und die Elemente 3, 4 auf den Trägerkörper 2 übertragen.
Die Armlehne 21 stützt sich in ihrer horizontalen Position zusätzlich über eine Auflage 22 gegen den Trägerkörper 2 ab. Die Armlehne 21 setzt sich zusammen aus einem Grundkörper 23, der sich seinerseits aus einem Unterteil 24 und einem Oberteil 25 zusammensetzt, und einer Armauflage 40 (Fig. 5, 7), die aus einem Trägerteil 41 und einer Abdeckung 42 besteht. Das Trägerteil 41 ist mit dem Oberteil des Grundkörpers 23 entweder fest oder verschiebbar verbunden. Das Unterteil 24 liegt mit Gegenhaltern 240, 241 (Fig. 6, 7) auf einer waagrechten Auflage 200 des Trägerkörpers 2 auf. Die Gegenhalter 240, 241 bestehen bevorzugt aus einem elastischen Material.
In dem Unterteil 23 sind rechteckige Öffnungen vorhanden, durch die die Teile 172, 182 hindurchragen. Dabei entsteht eine formschlüssige Verbindung zwischen den Scharnierbügeln 17, 18 und dem Grundkörper 23 dadurch, dass die Scharnierbügel 17, 18 jeweils an den den Teilen 171, 181 zugewandten Endseiten der Teile 172, 182 Ausnehmungen 173 bzw. 183 haben, in die die Wandung des Unterteils 24 im Bereich der Öffnungen hineinschiebbar ist. An ihren den Teilen 171, 181 abgewandten Endseiten haben die Teile 172, 182 ebenfalls auf ihrer zu der Öffnung gerichteten Seite Ausnehmungen 174, 184, in die Vorsprünge 261, 271 von Entrastelementen 26, 27 ragen. Diese ragen ebenfalls teilweise durch die Öffnungen hindurch, teilweise liegen sie auf dem Unterteil 24 auf. Sie sind jeweils in von dem Oberteil 25 gebildeten Führungen 28, 29 gegen die rücktreibende Kraft einer Druckfeder 30, 31 jeweils bis zu einem Anschlag 32 beweglich. Ferner bestehen sie vorzugsweise aus einem elastischen Kunststoff.
Wenn die Armlehne 21 durch eine Überreißkraft in Richtung eines Pfeils A (Fig. 3, 7) bewegt wird, wirkt an einer Trennschräge 33, die die Entrastelemente 26, 27 mit den Teilen 171, 181 bilden, eine Komponente der Überreißkraft in Richtung der Trennschräge, wodurch die Entrastelemente 26, 27 jeweils in Richtung zu dem jeweiligen Anschlag 32 bewegt werden (Pfeil B) und die Teile 171, 181 freigeben, so dass diese in Richtung eines Pfeils C aus dem Unterteil 24 des Grundkörpers 23 herausgeschwenkt werden. Die Schwenkbewegung wird in einer vorteilhaften Ausbildungsform der Erfindung dadurch unterstützt, dass dieser in dem an die Ausnehmungen 173, 183 angrenzenden Bereich eine gerundete Kante 34 aufweist.
Durch die Erfindung wird somit bei Aufbringen einer genau definierten Kraft ein wiederholsicheres Trennen der Armlehne 21 von den Scharnierbügeln 17, 18 ermöglicht. Es versteht sich, dass im Rahmen der Erfindung sowohl Armlehnen mit nur einem Scharnierbügel als auch solche mit mehr als zwei Scharnierbügeln gestaltet werden können, wobei stets eine Trennung bei einer vorgegebenen Überreißkraft möglich ist.

## Patentansprüche

1. Drehbeweglicher Körper (21), insbesondere Ablage, Tisch oder Armlehne (21) eines Kraftfahrzeugs oder eines Schienenfahrzeugs, der über mindestens einen in einem Scharnier (5, 6) drehbar gelagerten Scharnierbügel (17, 18) um einen vorgegebenen maximalen Drehbereich drehbar und gegen einen Endanschlag (50) anstellbar ist, **dadurch gekennzeichnet, dass** der Scharnierbügel (17, 18) über ein Entrastelement (26, 27) in dem Körper (21) gelagert ist und dass der Körper (21) bei Überschreiten einer Grenzkraft unter Freigabe des Scharnierbügels (17, 18) von diesem lösbar ist.

2. Körper (21) nach Anspruch 1, **dadurch gekennzeichnet, dass** das Entrastelement (26, 27) in einer Führung in Längsrichtung bezüglich des Scharnierbügels (17, 18) und des Scharniers (5, 6) beweglich, insbesondere drehbar, gelagert ist.

3. Körper (21) nach Anspruch 2, **dadurch gekennzeichnet, dass** das Entrastelement (26, 27) bezüglich eines Anschlages (32) in dem Körper (21) elastisch gelagert ist.

4. Körper (21) nach Anspruch 3, **dadurch gekennzeichnet, dass** das Entrastelement (26, 27) über eine Druckfeder (30,31) bezüglich des Anschlages (32) gelagert ist.

5. Körper (21) nach einem der Ansprüche 1 bis 4, **dadurch gekennzeichnet, dass** das Entrastelement (26, 27) selbst aus einem elastischen Material, insbesondere einem elastischen Kunststoff, besteht.

6. Körper (21) nach einem der Ansprüche 1 bis 5, **dadurch gekennzeichnet, dass** das Entrastelement (26, 27) gegenüber dem Scharnierbügel (17, 18) eine Trennschräge (33) aufweist.

7. Körper (21) nach Anspruch 6, **dadurch gekennzeichnet, dass** das Entrastelement (26, 27) einen in eine Ausnehmung (174, 184) des Scharnierbügels (17, 18) eingreifenden Vorsprung (261, 271) aufweist, der einem Unterteil (24) des Körpers (21) zugewandt ist.

8. Körper (21) nach Anspruch 7, **dadurch gekennzeichnet, dass** der Scharnierbügel (17, 18) eine Öffnung des Unterteils (24) durchgreift und mit seiner Oberseite an eine Wandung eines Oberteils (25) des Körpers (21) angrenzt.

9. Körper nach Anspruch 8, **dadurch gekennzeichnet, dass** der Scharnierbügel eine Öffnung des Unterteils durchgreift und mit seiner Oberseite an eine Wandung eines Oberteils des Grundkörpers angrenzt.

## Claims

1. A pivotal body (21), in particular a shelf, table or armrest (21) of a motor vehicle or rail vehicle, said pivotal body (21) being rotatable about a predetermined maximum range of rotation via a hinge stirrup (17, 18) pivoted in a hinge (5, 6) and being engageable against an end stop (50),
**characterized in that** said hinge stirrup (17, 18) is supported in said body (21) via a disengaging element (26, 27) and that in exceeding a limiting force and releasing said hinge stirrup (17, 18) the body (21) is releasable thereof.

2. The body (21) according to claim 1, **characterized in that** said disengaging element (26, 27) is slidable longitudinally in a guide with respect to said hinge stirrup (17, 18) and said hinge (5, 6), in particular said disengaging element (26, 27) is pivoted.

3. The body (21) according to claim 2, **characterized in that** said disengaging element (26, 27) is elastically supported in said body (21) with respect to a stop (32).

4. The body (21) according to claim 3, **characterized in that** said disengaging element (26, 27) is supported with respect to said stop (32) via a compression spring (30, 31).

5. The body (21) according to one of the preceding claims 1 to 4, **characterized in that** said disengaging element (26, 27) itself is composed of an elastic material, in particular of elastic plastic material.

6. The body (21) according to one of the preceding claims 1 to 5, **characterized in that** said disengaging element (26, 27) has a separation bevel (33) opposite to said hinge stirrup (17, 18).

7. The body (21) according to claim 6, **characterized in that** said disengaging element (26, 27) has a projection (261, 271) engaging in a notch (174, 184) of said hinge stirrup (17, 18), said projection (261, 271) facing an underpart (24) of said body (21).

8. The body (21) according to claim 7, **characterized in that** said hinge stirrup (17, 18) grabs through an opening of said underpart (24) and abuts against a wall of an upper part (25) of said body (21) with its upper surface.

9. The body according to claim 8, **characterized in that** said hinge stirrup grabs through an opening of said underpart and abuts against a wall of an upper part of said carrier with its upper surface.

## Revendications

1. Corps rotatif (21), en particulier vide-poches, tablette ou accoudoir (21) dans un véhicule automobile ou un véhicule ferroviaire, qui peut tourner autour d'une zone de rotation maximale prédéfinie, par l'intermédiaire d'au moins un étrier à charnière (17, 18), qui est monté rotatif dans une charnière (5, 6), et qui peut être amené contre une butée finale (50), **caractérisé en ce que** l'étrier à charnière (17, 18) est monté dans le corps (21) par l'intermédiaire d'un élément de déverrouillage (26, 27) et **en ce que** le corps (21), en cas de dépassement d'une force limite et moyennant le déblocage de l'étrier à charnière (17, 18), peut être désolidarisé de celui-ci.

2. Corps (21) selon la revendication 1, **caractérisé en ce que** l'élément de déverrouillage (26, 27) est monté mobile, en particulier tournant, dans un guide dans le sens longitudinal par rapport à l'étrier à charnière (17, 18) et à la charnière (5, 6).

3. Corps (21) selon la revendication 2, **caractérisé en ce que** l'élément de déverrouillage (26, 27) est monté de manière élastique par rapport à une butée (32) dans le corps (21).

4. Corps (21) selon la revendication 3, **caractérisé en ce que** l'élément de déverrouillage (26, 27) est monté par l'intermédiaire d'un ressort de compression (30, 31) par rapport à la butée (32).

5. Corps (21) selon l'une des revendications 1 à 4, **caractérisé en ce que** l'élément de déverrouillage (26, 27) lui-même est réalisé dans un matériau élastique, en particulier dans une matière plastique élastique.

6. Corps (21) selon l'une des revendications 1 à 5, **caractérisé en ce que** l'élément de déverrouillage (26, 27) comporte un chanfrein de séparation (33) par rapport à l'étrier à charnière (17, 18).

7. Corps (21) selon la revendication 6, **caractérisé en ce que** l'élément de déverrouillage (26, 27) comporte une saillie (261, 271), qui s'engage dans un évidement (174, 184) de l'étrier à charnière (17, 18) et qui est orientée vers une partie inférieure (24) du corps (21).

8. Corps (21) selon la revendication 7, **caractérisé en ce que** l'étrier à charnière (17, 18) passe à travers un orifice de la partie inférieure (24) et est adjacent avec sa face supérieure à une paroi d'une partie supérieure (25) du corps (21).

9. Corps selon la revendication 8, **caractérisé en ce que** l'étrier à charnière passe à travers un orifice de la partie inférieure et est adjacent avec sa face supérieure à une paroi d'une partie supérieure du corps de base.
